# EUROPÄISCHE PATENTSCHRIFT

(11) **EP 2 930 412 B1**
(45) Veröffentlichungstag und Bekanntmachung des Hinweises auf die Patenterteilung: **01.03.2017**
(21) Anmeldenummer: 15162602.5
(22) Anmeldetag: 07.04.2015
(51) Int. Cl.: F16L 27/08, F16L 47/02, F16L 47/18, F16L 37/098, B29L 31/24, B29C 65/08, B29C 65/16, B29C 65/00, B29C 65/06

(54) **VERFAHREN ZUR HERSTELLUNG EINES STECKVERBINDERS UND STECKVERBINDER**
METHOD FOR MANUFACTURING A CONNECTOR AND CONNECTOR
PROCÉDÉ DE FABRICATION D'UN CONNECTEUR À FICHES ET CONNECTEUR À FICHES

(30) Priorität: 11.04.2014 DE 102014105165
(43) Veröffentlichungstag der Anmeldung: 14.10.2015
(73) Patentinhaber: NORMA Germany GmbH, 63477 Maintal (DE)
(72) Erfinder: Mann, Stephan, 63599 Biebergemünd (DE); Stoll, Viktor, 63538 Großkrotzenburg (DE); Steinkamp, Christoph, 63599 Biebergemünd (DE)
(74) Vertreter: Patentanwälte Olbricht Buchhold Keulertz

(56) Entgegenhaltungen:
- EP-A1- 0 382 971
- EP-A1- 1 927 806
- EP-A1- 2 527 702
- DE-C- 811 765
- DE-U1-202007 017 181
- FR-A1- 2 185 769
- FR-A1- 2 884 584
- JP-A- 2005 299 827
- US-A- 2 479 580

## Beschreibung

Die Erfindung betrifft ein Verfahren zur Herstellung eines Steckverbinders. Die Erfindung betrifft weiterhin einen Steckverbinder umfassend ein erstes rohrförmiges Bauteil und ein zweites rohrförmiges Bauteil, sowie eine erste Verbindungsgeometrie und eine zweite Verbindungsgeometrie, wobei die erste Verbindungsgeometrie in einer ersten Verbindungsebene angeordnet ist, und wobei die zweite Verbindungsgeometrie in der ersten Verbindungsebene angeordnet ist. Steckverbinder dienen beispielsweise der Verbindung eines Schlauchs oder ähnlichem an einen Tank oder eine Rohrleitung. Beispielsweise kann dazu an einem Ende des Steckverbinders ein Verbindungsstutzen mit einer Rastvorrichtung vorgesehen sein. An einem anderen Ende des Steckverbinders kann dann ein Anschlussstutzen für einen Schlauch beispielsweise in Form eines Tannenbaums mit mehreren Vorsprüngen verwendet werden.

Die JP 2005 299827 A offenbart den Oberbegriff der unabhängigen Ansprüche 7 und 1. Weitere Steckverbinder ähnlicher Art sind aus EP 1 927 806 A1, EP 0 382 971 A1 sowie DE 20 2007 017181 U1 bekannt,

Ein Steckverbinder dieser Art mit einem einstückigen Korpus ist beispielsweise aus DE 10 2006 030 058 B4 bekannt. Die Herstellung erfolgt üblicherweise durch Spritzguss aus einem Kunststoff unter Verwendung eines für eine spezielle Steckverbinderform angefertigten Werkzeugs.

Figur 1 der DE 10 2006 030 058 B4 zeigt beispielsweise einen Steckverbinder in der eine erste Längsachse des Verbindungsstutzens senkrecht zu einer zweiten Längsachse des Anschlussstutzens verläuft. Der Steckverbinder biegt also um 90° ab.

Wird jedoch ein anderer Relativwinkel zwischen der ersten und der zweiten Längsachse benötigt (beispielsweise ein beliebiger Winkel zwischen 0 und 90°), so wird für jeden Relativwinkel ein eigenes neues Werkzeug benötigt, dessen Herstellung relativ zeitaufwendig und teuer ist. Anschlussstutzen dieser Art können daher kostengünstig nur für Standardrelativwinkel und/oder in großen Stückzahlen produziert werden.

Der Erfindung liegt daher die Aufgabe zugrunde, die Herstellung eines Steckverbinders flexibler und kostengünstiger zu gestalten.

Erfindungsgemäß wird diese Aufgabe durch ein Verfahren nach Anspruch 1 zur Herstellung eines Steckverbinders gelöst, wobei der Steckverbinder ein erstes rohrförmiges Bauteil und ein zweites rohrförmiges Bauteil, sowie eine erste Verbindungsgeometrie und eine zweite Verbindungsgeometrie umfasst, wobei die erste Verbindungsgeometrie in einer ersten Verbindungsebene angeordnet ist, wobei die zweite Verbindungsgeometrie in der ersten Verbindungsebene angeordnet ist, und wobei die erste Verbindungsebene gegenüber einer ersten Längsachse des ersten Bauteils geneigt ist, und wobei die erste Verbindungsebene gegenüber einer zweiten Längsachse des zweiten Bauteils geneigt ist, und wobei durch ein Verdrehen des ersten Bauteils gegenüber dem zweiten Bauteil ein Relativwinkel zwischen der ersten Längsachse und der zweiten Längsachse veränderbar ist, umfassend die folgenden Schritte:
- Auswahl eines Relativwinkels zwischen der ersten Längsachse und der zweiten Längsachse durch Verdrehen des ersten Bauteils gegenüber dem zweiten Bauteil,
- stoffschlüssiges Verbinden der ersten Verbindungsgeometrie mit der zweiten Verbindungsgeometrie in dem ausgewählten Relativwinkel.

Erfindungsgemäß werden also zunächst ein erstes rohrförmiges Bauteil sowie ein zweites rohrförmiges Bauteil bereitgestellt, die beispielsweise einzeln durch Spritzguss hergestellt werden können. Hier und im Folgenden werden das erste rohrförmige Bauteil und das zweite rohrförmige Bauteil der Einfachheit halber als erstes Bauteil und als zweites Bauteil bezeichnet. Die rohrförmigen Bauteile müssen hier nicht zwangsläufig einen kreisförmigen Querschnitt aufweisen, sondern der Querschnitt kann auch jede andere Form, wie beispielsweise oval, viereckig oder vieleckig haben. Weiterhin kann sich die Form und die Größe des Rohrquerschnitts auch über die Länge der rohrförmigen Bauteile verändern.

Der Steckverbinder weist außerdem eine erste Verbindungsgeometrie und eine zweite Verbindungsgeometrie auf, die in einer gemeinsamen ersten Verbindungsebene angeordnet sind. Die erste Verbindungsgeometrie und die zweite Verbindungsgeometrie können dabei jeweils gegenüber beiden Längsachsen des ersten bzw. des zweiten Bauteils geneigt sein. Im einfachsten Fall weist also jedes der rohrförmigen Bauteile an einem Ende eine der beiden Verbindungsgeometrien auf. Je eine Verbindungsgeometrie kann beispielsweise umlaufend an einem axialen Ende eines der Bauteile angeordnet sein. Üblicherweise greift eine der Verbindungsgeometrien in die andere Verbindungsgeometrie zunächst formschlüssig ein bevor eine endgültige Verbindung der Verbindungsgeometrien erfolgt. Dadurch dass die erste Verbindungsebene gegenüber beiden Längsachsen der beiden Bauteile geneigt ist, erfolgt durch ein Verdrehen des ersten Bauteils gegenüber dem zweiten Bauteil eine Änderung des Relativwinkels zwischen der ersten Längsachse und der zweiten Längsachse. Es kann also durch ein relatives Verdrehen des ersten Bauteils gegenüber dem zweiten Bauteil ein Relativwinkel zwischen der ersten Längsachse und der zweiten Längsachse eingestellt werden. Welche Relativwinkel hier möglich sind, hängt vor allem davon ab, in welchem Winkel die Verbindungsebene gegenüber den beiden Längsachsen geneigt ist. Wenn die Verbindungsebene beispielsweise jeweils um 45° relativ zu den beiden Längsachsen geneigt ist, so können durch ein Verdrehen des ersten Bauteils gegenüber dem zweiten Bauteil alle Relativwinkel zwischen 0 und 90° eingestellt werden. Die erste Verbindungsgeometrie und die zweite Verbindungsgeometrie müssen jedoch nicht zwangsläufig auch in dem ersten Bauteil oder dem zweiten Bauteil angeordnet sein.

Sobald der gewünschte Relativwinkel ausgewählt ist, erfolgt dann eine stoffschlüssige Verbindung der ersten Verbindungsgeometrie mit der zweiten Verbindungsgeometrie. In Bezug auf die Größe des Relativwinkels sei klar gestellt, dass sich die erste Längsachse und die zweite Längsachse nicht zwangsläufig in jeder Drehstellung schneiden müssen. Es kann jedoch stets eine zur ersten Längsachse parallele Achse gefunden werden, die die zweite Längsachse schneidet, so dass sich auch stets ein Relativwinkel zwischen erster Längsachse und zweiter Längsachse definieren lässt. Es ist jedoch auch möglich, dass sich die erste Längsachse und die zweite Längsachse unabhängig von der Drehstellung der beiden Bauteile stets im selben Punkt schneiden.

Durch ein derartiges Verfahren ist es nun möglich, Steckverbinder mit beliebigen Abbiegewinkeln herzustellen, wobei im einfachsten Fall lediglich für das erste und das zweite Bauteil je ein Werkzeug zum Spritzguss notwendig ist. Es ist somit auch möglich, Steckverbinder mit beliebigen Relativwinkeln zwischen den beiden Längsachsen kostengünstig und ohne zusätzliche Verzögerung zur Herstellung neuer Werkzeuge herzustellen.

Außerdem wird durch ein derartiges Verfahren eine modulare Bauweise ermöglicht, bei der sich aus denselben Grundbauteilen eine Vielzahl an verschiedenen Steckverbindern herstellen lassen. Dies führt einerseits zu einer höheren Flexibilität in der Produktion und senkt gleichzeitig insbesondere bei geringen Stückzahlen die Produktionskosten.

Vorzugsweise ist die erste Verbindungsgeometrie in einem Zwischenbauteil angeordnet, das vor dem stoffschlüssigen Verbinden der ersten Verbindungsgeometrie mit der zweiten Verbindungsgeometrie gegenüber dem ersten Bauteil und/oder dem zweiten Bauteil verdrehbar ist. Das Zwischenbauteil kann hier beispielsweise in Form eines zylinderförmigen Rohrabschnitts vorliegen. Die erste Verbindungsgeometrie ist dann im Zwischenbauteil angeordnet, während die zweite Verbindungsgeometrie beispielsweise an einem axialen Ende des ersten oder des zweiten Bauteils angeordnet ist. Das Zwischenbauteil kann vor der stoffschlüssigen Verbindung der ersten Verbindungsgeometrie mit der zweiten Verbindungsgeometrie gegenüber dem ersten oder dem zweiten Bauteil oder gegenüber beiden Bauteilen verdrehbar sein. Es ist auch möglich, dass das Zwischenbauteil von Anfang an drehfest mit dem ersten Bauteil oder dem zweiten Bauteil verbunden, insbesondere verrastet, ist und die zweite Verbindungsgeometrie im nicht mit dem Zwischenbauteil drehfest verbundenen Bauteil angeordnet ist. Ein solches Zwischenbauteil ermöglicht es weitere Funktionalitäten zum Steckverbinder hinzuzufügen, wobei es insbesondere wenn das Zwischenbauteil als separates Bauteil ausgebildet ist, nicht einmal erforderlich ist, dass ein Werkzeug zur Herstellung des ersten Bauteils oder des zweiten Bauteils angepasst wird. Vielmehr ist eine modulare Bauweise vorstellbar, in der Steckverbinder mit Zwischenbauteil oder ohne Zwischenbauteil mit denselben Werkzeugen zur Herstellung des ersten rohrförmigen Bauteils und des zweiten rohrförmigen Bauteils hergestellt werden können.

Es ist von Vorteil, wenn der Steckverbinder eine dritte Verbindungsgeometrie und eine vierte Verbindungsgeometrie umfasst, wobei die dritte Verbindungsgeometrie und die vierte Verbindungsgeometrie in einer zweiten Verbindungsebene angeordnet sind. Ein derartiges Vorgehen ist insbesondere dann von Vorteil, wenn ein Zwischenbauteil verwendet wird. In diesem Fall können die dritte Verbindungsgeometrie und die vierte Verbindungsgeometrie beispielsweise dazu verwendet werden, um das Zwischenbauteil mit dem zweiten Bauteil zu verbinden, während die erste und die zweite Verbindungsgeometrie dazu verwendet wird, das Zwischenbauteil mit dem ersten Bauteil zu verbinden. In diesem Fall ist auch sichergestellt, dass das Zwischenbauteil anfänglich gegenüber dem ersten Bauteil und dem zweiten Bauteil verdrehbar ist und somit beispielsweise ein im Zwischenbauteil angeordneter Fluidausgang oder ähnliches in jeder gewünschten Drehstellung fixiert werden kann. Auch in diesem Fall ist unter einer Verbindungsebene keine mathematische Ebene sondern ein ebener Bereich mit einer gewissen räumlichen Dicke zu verstehen.

Vorzugsweise verläuft die zweite Verbindungsebene parallel zur ersten Verbindungsebene unabhängig vom Relativwinkel zwischen der ersten Längsachse und der zweiten Längsachse. Dies lässt sich beispielsweise dadurch realisieren, dass das Zwischenbauteil zylinderförmig ausgestaltet ist und an je einem Ende eine Verbindungsgeometrie aufweist. Je eine dieser Verbindungsgeometrien greift dann vorzugsweise in je eine Verbindungsgeometrie des ersten Bauteils und des zweiten Bauteils ein. Es ist jedoch auch vorstellbar, dass die ersten Verbindungsebene und die zweite Verbindungsebene nicht parallel zueinander verlaufen, wodurch sich je nach Ausführungsform noch größere Winkelbereiche als 0 bis 90° zwischen der ersten Längsachse und der zweiten Längsachse erzielen lassen.

Es ist von Vorteil, wenn nach der Auswahl des Relativwinkels zwischen der ersten Längsachse und der zweiten Längsachse die dritte Verbindungsgeometrie mit der vierten Verbindungsgeometrie stoffschlüssig verbunden wird. Es ist jedoch auch vorstellbar, dass die dritte Verbindungsgeometrie und die vierte Verbindungsgeometrie beispielsweise eine Rastverbindung ausbilden oder das die dritte Verbindungsgeometrie und die vierte Verbindungsgeometrie vor der Auswahl des Relativwinkels stoffschlüssig verbunden werden.

Erfindungsgemäß erfolgt mindestens eine stoffschlüssige Verbindung durch Reibschweißen und/oder Ultraschallschweißen und/oder Heißgasschweißen und/oder Laserscheißen.

Eine der Verbindungsgeometrien weist erfindungsgemäß einen umlaufenden, keilförmigen Verbindungsvorsprung auf, der in eine umlaufende keilförmige Ausnehmung einer anderen Verbindungsgeometrie eingreift. Es ist bevorzugt, wenn hierbei der keilförmige Verbindungsvorsprung größer ist als die keilförmige Ausnehmung, so dass eine begrenzte Menge überschüssiges Material beispielsweise nach radial innen und nach radial außen fließen kann, um die Dichtheit der stoffschlüssigen Verbindung zu verbessern. Es können diesbezüglich auch vorzugsweise einer oder mehrere umlaufende Kanten vorgesehen sein, um zu verhindern, dass überschüssiges Material bis an eine radiale Außenseite oder eine radiale Innenseite des ersten Bauteils, des zweiten Bauteils oder des Zwischenbauteils gelangen kann. Vorzugsweise weist der Steckverbinder mindestens einen an einer Außenseite des Steckverbinders angeordneten Vorsprung auf, wobei der Vorsprung senkrecht zur ersten Verbindungsebene verläuft. Es ist besonders bevorzugt, wenn am ersten Bauteil und am zweiten Bauteil mindestens je ein solcher Vorsprung angeordnet ist. Dies ermöglicht eine möglichst einfache Kontrolle des momentan gewählten Relativwinkels zwischen dem ersten Bauteil und dem zweiten Bauteil. Vorzugsweise ist der mindestens eine Vorsprung an einer radialen Außenseite des ersten Bauteils oder des zweiten Bauteils benachbart zur ersten Verbindungsgeometrie oder zur zweiten Verbindungsgeometrie angeordnet. Der Vorsprung verläuft vorzugsweise senkrecht zur ersten Verbindungsebene wodurch sich der Relativwinkel zwischen der ersten Längsachse und der zweiten Längsachse möglichst gut kontrollieren lässt.

Die oben genannte Aufgabe wird weiterhin durch einen Steckverbinder nach Anspruch 7 gelöst. Dabei ist die erste Verbindungsebene gegenüber einer ersten Längsachse des ersten Bauteils geneigt, wobei die erste Verbindungsebene gegenüber einer zweiten Längsachse des zweiten Bauteils geneigt ist, und wobei die erste Verbindungsgeometrie mit der zweiten Verbindungsgeometrie stoffschlüssig verbunden ist.

Ein solcher Steckverbinder weist also eine sowohl gegenüber einer ersten Längsachse des ersten Bauteils als auch gegenüber einer zweiten Längsachse des zweiten Bauteils geneigte erste Verbindungsebene auf. In der ersten Verbindungsebene sind sowohl die erste Verbindungsgeometrie als auch die zweite Verbindungsgeometrie angeordnet. Unter einer Verbindungsebene im Sinne der Erfindung ist keine exakte zweidimensionale mathematische Ebene zu verstehen, sondern vielmehr ein ebener Bereich mit einer gewissen räumlichen Dicke. Die erste Verbindungsgeometrie und die zweite Verbindungsgeometrie sind zwar im fertigen Steckverbinder stoffschlüssig verbunden (beispielsweise durch Reibschweißen oder Ultraschallschweißen), sie lassen sich jedoch üblicherweise durch mindestens eine umlaufende radiale Erweiterung im Bereich der ersten Verbindungsgeometrie und der zweiten Verbindungsgeometrie identifizieren. Vergleichbares gilt für eventuelle dritte und vierte Verbindungsgeometrien.

Ein derartiger Steckverbinder kann also mit einer modularen Bauweise produziert werden, bei der die gleichen ersten und zweiten rohrförmigen Bauteile für eine Vielzahl an verschiedenen Steckverbindern verwendet werden. Dies senkt die Produktionskosten und erhöht die Flexibilität der Produktion.

Vorzugsweise ist die erste Verbindungsgeometrie in einem Zwischenbauteil angeordnet, wobei die zweite Verbindungsgeometrie im ersten Bauteil oder im zweiten Bauteil angeordnet ist. Ein solches Zwischenbauteil erlaubt es zusätzliche Funktionen in den Steckverbinder einzubeziehen, ohne dass das erste Bauteil oder das zweite Bauteil (und insbesondere die Werkzeuge zu deren Herstellung) verändert werden müssten. Das Zwischenbauteil kann als im Wesentlichen zylinderförmiger Rohrabschnitt vorgesehen sein und an beiden axialen Enden je eine Verbindungsgeometrie aufweisen, die jeweils mit einer Verbindungsgeometrie des ersten Bauteils und mit einer Verbindungsgeometrie des zweiten Bauteils verbunden sind. Alternativ kann das Zwischenbauteil auch mit dem ersten Bauteil oder dem zweiten Bauteil durch eine Rastverbindung verbunden sein. Dies hat zwar den Vorteil, dass üblicherweise nur eine stoffschlüssige Verbindung durch Reibschweißen bzw. Ultraschallschweißen vorgenommen werden muss. In diesem Fall ist jedoch gleichzeitig notwendig, dass das erste Bauteil oder das zweite Bauteil verändert wird, um beispielsweise eine Rastverbindung mit dem Zwischenbauteil zu ermöglichen.

Es ist von Vorteil, wenn das Zwischenbauteil einen Nebenstutzen umfasst. In diesem Fall erlaubt das Zwischenteil also beispielsweise eine zusätzliche Abzweigung im Fluidweg vorzusehen. Alternativ kann der Nebenstutzen auch dazu verwendet werden, um beispielsweise eine Messsonde in den Steckverbinder einzuführen.

Es ist von Vorteil, wenn im Zwischenbauteil ein Ventil angeordnet ist. Eine derartige Ausführungsform erlaubt es dem Steckverbinder nun auch noch eine Ventilfunktionalität hinzuzufügen. Hierzu muss auch lediglich ein Werkzeug zur Herstellung des Zwischenbauteils angepasst werden, eine Veränderung der Werkzeuge zur Herstellung des ersten Bauteils und des zweiten Bauteils ist hingegen nicht notwendig. Somit kann auch eine verhältnismäßig spezielle Form des Steckverbinders mit beliebigen Relativwinkeln zwischen den Längsachsen des ersten Bauteils und des zweiten Bauteils hergestellt werden, ohne dass dies übermäßig große Kosten erfordern würde.

Es ist außerdem bevorzugt, wenn im Zwischenbauteil ein Heizelement angeordnet ist und/oder dass eine Heizleitung durch einen im Zwischenbauteil angeordneten Heizleitungsanschluss in den Steckverbinder hineingeführt ist. Eine solche Ausführungsform ist insbesondere dann von Vorteil, wenn der Steckverbinder für eine Fluidleitung verwendet wird, die ein Fluid mit einem verhältnismäßig hohen Gefrierpunkt führt. Dies betrifft vor allem die im Automobilbereich oftmals verwendeten Urea-Leitungen, die in vielen Fällen ein Heizelement bzw. eine Heizleitung umfassen.

Es ist außerdem von Vorteil, wenn die erste Verbindungsgeometrie und die zweite Verbindungsgeometrie jeweils kreisförmig in der ersten Verbindungsebene verlaufen. Durch eine derartige Ausgestaltung lässt sich möglichst einfach sicherstellen, dass sich die erste Verbindungsgeometrie und die zweite Verbindungsgeometrie in jedem beliebigen Relativwinkel zwischen erster Längsachse und zweiter Längsachse verbinden lassen. Gleichzeitig erlaubt eine solche Ausgestaltung auch die stoffflüssige Verbindung der ersten Verbindungsgeometrie und der zweiten Verbindungsgeometrie mittels Reibschweißen. Auch hier sei darauf hingewiesen, dass die erste Verbindungsebene nicht als exakte mathematische Ebene zu verstehen ist sondern auch eine gewisse räumliche Dicke aufweist in der hier die erste Verbindungsgeometrie und die zweite Verbindungsgeometrie verlaufen.

Es ist von Vorteil, wenn sich die erste Längsachse und die zweite Längsachse in einem geometrischen Mittelpunkt der ersten Verbindungsgeometrie und der zweiten Verbindungsgeometrie schneiden. In dieser Ausgestaltung ist sichergestellt, dass sich die erste Längsachse und die zweite Längsachse unabhängig von der relativen Drehstellung des ersten Bauteils und des zweiten Bauteils stets im selben Punkt schneiden. Dies hat den Vorteil, dass es insbesondere in der 0° Drehstellung zwischen dem ersten Bauteil und dem zweiten Bauteil nicht zu einem eventuell ungewünschten Achsversatz zwischen den Längsachsen kommt. Es ist in diesem Fall also möglich, dass die erste Längsachse und die zweite Längsachse in der 0° Drehstellung zwischen dem ersten Bauteil und dem zweiten Bauteil exakt aufeinander liegen.

Es ist weiterhin bevorzugt, wenn das erste Bauteil und/oder das zweite Bauteil an einem Ende eine radiale Erweiterung aufweist. Durch eine derartige radiale Erweiterung lässt sich die Form und Position der Verbindungsgeometrien anpassen. So lässt sich beispielsweise sicherstellen, dass sich die erste Längsachse und die zweite Längsachse in einem geometrischen Mittelpunkt der ersten Verbindungsgeometrie und der zweiten Verbindungsgeometrie schneiden unabhängig vom Relativwinkel zwischen der ersten Längsachse und der zweiten Längsachse. Vorzugsweise hat die radiale Erweiterung die Form eines Kugelschalenausschnitts.

Es ist bevorzugt, wenn der Steckverbinder mindestens einen an einer Außenseite des Steckverbinders angeordneten Vorsprung aufweist, wobei insbesondere der Vorsprung senkrecht zur ersten Verbindungsebene verläuft. Hier ist es besonders bevorzugt, wenn der Steckverbinder am ersten Bauteil und am zweiten Bauteil mindestens einen an einer Außenseite angeordneten Vorsprung aufweist, der jeweils senkrecht zur ersten Verbindungsebene verläuft. Weiterhin kann vorzugsweise das erste Bauteil und das zweite Bauteil jeweils zwei solche Vorsprünge aufweisen, wobei die Vorsprünge dann vorzugsweise jeweils um 180° versetzt an einer Außenseite des ersten Bauteils bzw. an einer Außenseite des zweiten Bauteils angeordnet sind. Diese Vorsprünge erlauben eine möglichst gute Kontrolle des Relativwinkels zwischen der ersten Längsachse und der zweiten Längsachse während des Herstellungsprozesses.

Die Erfindung wird im Folgenden anhand bevorzugter Ausführungsformen in Verbindung mit den Zeichnungen näher beschrieben. Hierin zeigen
- Fig. 1: eine Seitenansicht einer ersten Ausführungsform eines erfindungsgemäßen Steckverbinders,
- Fig. 2: eine Schnittansicht des Steckverbinders entsprechend Figur 1,
- Fig. 3: eine Detailansicht der Schnittansicht nach Figur 2,
- Fig. 4a-4e: erfindungsgemäße Steckverbinder entsprechend der Ausführungsform nach den Figuren 1 bis 3 in verschiedenen Relativwinkeln zwischen der ersten und der zweiten Längsachse,
- Fig.5: eine Seitenansicht einer zweiten Ausführungsform eines erfindungsgemäßen Steckverbinders,
- Fig.6: eine Seitenansicht einer dritten Ausführungsform eines erfindungsgemäßen Steckverbinders,
- Fig.7: eine Schnittansicht des Steckverbinders entsprechend Fig. 6,
- Fig.8: eine Detailansicht der Schnittansicht nach Fig. 7,
- Fig.9: eine Schnittansicht entsprechend der Schnittebene A aus Fig. 7 durch die erste und die zweite Verbindungsgeometrie,
- Fig.10: eine Seitenansicht einer vierten Ausführungsform eines erfindungsgemäßen Steckverbinders,
- Fig. 11: eine Schnittansicht des Steckverbinders entsprechend Fig. 10.

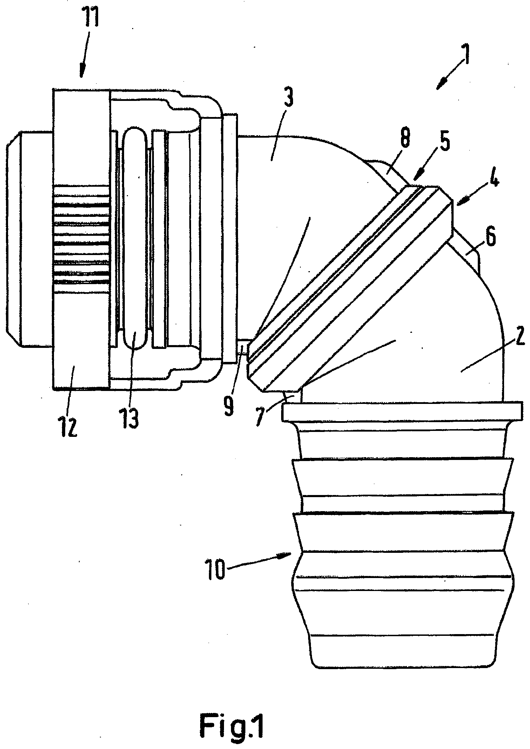

Figur 1 zeigt eine erste Ausführungsform eines erfindungsgemäßen Steckverbinders 1 der ein erstes rohrförmiges Bauteil 2 sowie ein zweites rohrförmiges Bauteil 3 aufweist. In dieser Ausführungsform ist eine erste Verbindungsgeometrie 4 an einem Ende des ersten Bauteils 2 angeordnet. Gleichzeitig ist eine zweite Verbindungsgeometrie 5 an einem Ende des zweiten Bauteils 3 angeordnet. Die erste Verbindungsgeometrie 4 umgreift hier teilweise von radial außen die zweite Verbindungsgeometrie 5.

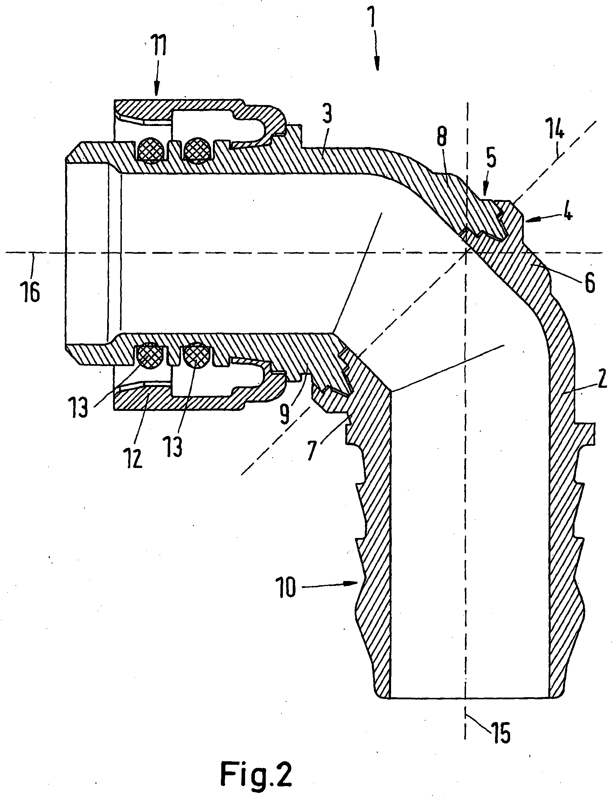

Das erste Bauteil 2 weist außerdem Vorsprünge 6,7 auf, die an einer radialen Außenseite des Bauteils 2 angeordnet sind. In vergleichbarer Weise umfasst das zweite Bauteil 3 Vorsprünge 8, 9, die ebenfalls an einer radialen Außenseite des zweiten Bauteils 3 angeordnet sind. Die Vorsprünge 6 bis 9 sind hier insbesondere für das Herstellungsverfahren vorteilhaft, da sie einerseits eine kontrollierte Einstellung des Relativwinkels zwischen einer ersten Längsachse und einer zweiten Längsachse (siehe auch Fig. 2) erlauben. Die Vorsprünge 7,9 haben den weiteren Vorteil, dass lokale Schwachstellen der Spritzgusswerkzeuge zur Herstellung des ersten Bauteils und des zweiten Bauteils vermieden werden können. Ohne die Vorsprünge 7,9 müssten die Werkzeuge an diesen Stellen sehr dünn ausgebildet sein, was einen vorzeitigen Verschleiß begünstigen würde.

In der vorliegenden Ausführungsform weist das zweite Bauteil 2 einen Anschlussstutzen 10 in Form eines Tannenbaumanschlusses auf. Das zweite Bauteil 3 weist hingegen einen Verbindungsstutzen 11 mit einer Rastvorrichtung 12, sowie Dichtringe 13 auf.

Figur 2 zeigt eine Schnittdarstellung des Steckverbinders 1 entsprechend Figur 1. Die erste Verbindungsgeometrie 4 und die zweite Verbindungsgeometrie 5 sind in bzw. parallel zu einer ersten Verbindungsebene 14 angeordnet. Das erste Bauteil 2 weist eine erste Längsachse 15 auf, die gegenüber der ersten Verbindungsebene 14 geneigt ist. Dementsprechend weist das zweite Bauteil 3 eine zweite Längsachse 16 auf, die auch gegenüber der ersten Verbindungsebene 14 geneigt ist.

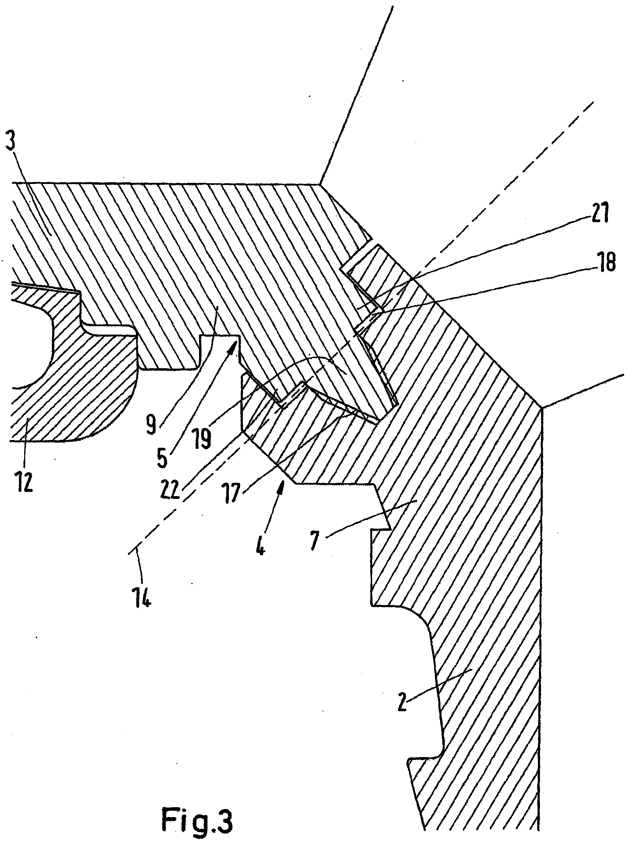

Figur 3 zeigt eine Detailansicht der ersten Verbindungsgeometrie 4 und der zweiten Verbindungsgeometrie 5 entsprechend der in Figur 2 gezeigten Ausführungsform. Die erste Verbindungsgeometrie 4 umfasst hier eine keilförmige Ausnehmung 17. Die keilförmige Ausnehmung 17 verläuft hier umlaufend parallel zur ersten Verbindungsebene 14. Die erste Verbindungsgeometrie 4 umfasst weiterhin eine rechteckige Ausnehmung 18, die ebenfalls umlaufend parallel zur ersten Verbindungsebene 14 verläuft. Die keilförmige Ausnehmung 17 schließt an die rechteckige Ausnehmung 18 innerhalb der ersten Verbindungsgeometrie 4 an. "Rechteckig" bzw. "keilförmig" bezeichnet hier jeweils einen rechteckigen bzw. keilförmigen Querschnitt der Ausnehmungen 17, 18.

Die zweite Verbindungsgeometrie 5 umfasst einen keilförmigen Verbindungsvorsprung 19, der umlaufend und parallel zur ersten Verbindungsebene 14 verläuft. Die zweite Verbindungsgeometrie 5 weist außerdem einen rechteckigen Verbindungsvorsprung 20 auf, der umlaufend und parallel zur ersten Verbindungsebene 14 verläuft. Der rechteckige Verbindungsvorsprung 20 weist zwei umlaufende Schultern 21, 22 auf. Eine umlaufende Schulter 21 ist an einer radialen Innenseite des rechteckigen Verbindungsvorsprungs 20 angeordnet und eine umlaufende Schulter 22 ist an einer radialen Außenseite des rechteckigen Verbindungsvorsprungs 20 angeordnet. Auch hier betreffen die Begriffe "rechteckig" und "keilförmig" jeweils den Querschnitt der Vorsprünge.

Der keilförmige Verbindungsvorsprung 19 greift hier in die keilförmige Ausnehmung 17 ein, wobei der keilförmige Verbindungsvorsprung 19 einen größeren Querschnitt als die keilförmige Ausnehmung 17 aufweist. Es steht somit überschüssiges Material zur Verfügung, das beispielsweise während eines Schweißvorgangs zur Fixierung der relativen Winkelposition zwischen den beiden Längsachsen 15, 16 in die rechteckige Ausnehmung 18 fließen kann. Das überschüssige Material kann insbesondere auch eine zumindest teilweise stoffschlüssige Verbindung zwischen dem rechteckigen Verbindungsvorsprung 20 und der rechteckigen Ausnehmung 18 ermöglichen und somit die Verbindung zwischen dem ersten Bauteil 2 und dem zweiten Bauteil 3 stabiler und dichter gestalten. Die Schultern 21,22 verhindern hierbei, dass größere Mengen des Materials radial nach innen oder radial nach außen die Verbindungsgeometrien 4, 5 verlässt und beispielsweise in den Innenraum der Fluidleitung gerät. Figuren 2 und 3 zeigen also den Steckverbinder 1 vor einer stoffschlüssigen Verbindung des ersten Bauteils 2 mit dem zweiten Bauteil 3 bzw. der ersten Verbindungsgeometrie mit der zweiten Verbindungsgeometrie.

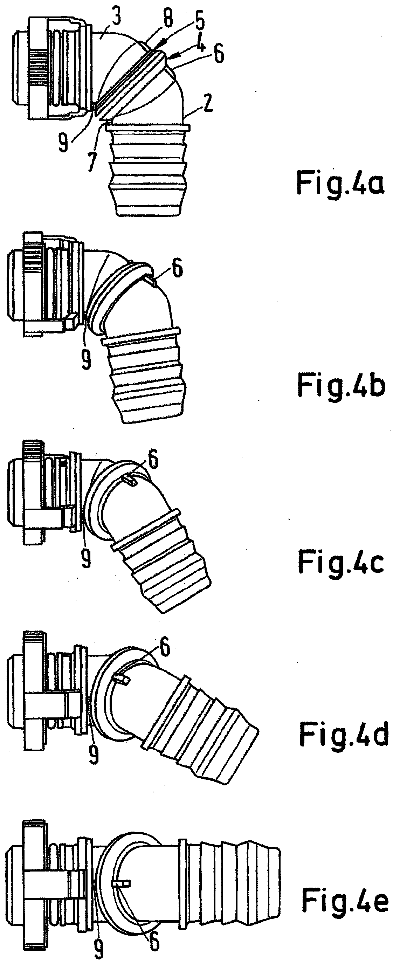

Figuren 4a bis 4e zeigen fünf verschiedene Winkelstellungen zwischen der ersten Längsachse 15 des ersten Bauteils 2 und der zweiten Längsachse 16 des zweiten Bauteils 3, der Reihe nach in den Winkeln 90°, 67,5°,45°, 22,5° und 0°. Selbstverständlich kann während des Herstellungsverfahrens auch jeder andere dazwischenliegende Winkel durch Verdrehen des ersten Bauteils 2 gegenüber dem zweiten Bauteil 3 ausgewählt werden und danach durch stoffschlüssiges Verbinden der ersten Verbindungsgeometrie 4 mit der zweiten Verbindungsgeometrie 5 fixiert werden.

Wie in Figur 4a bis 4e erkennbar, werden bei einem Verdrehen des ersten Bauteils 2 gegenüber dem zweiten Bauteil 3 auch die Vorsprünge 6, 7 gegenüber den Vorsprüngen 8, 9 verdreht. Die Vorsprünge 6 bis 9 erlauben somit eine Kontrolle und Steuerung des eingestellten Relativwinkels zwischen der ersten Längsachse 15 und der zweiten Längsachse 16.

Während des Verdrehens des ersten Bauteils 2 gegenüber dem zweiten Bauteil 3 bleibt der Relativwinkel zwischen der ersten Längsachse 15 und der ersten Verbindungsebene 14 sowie der Relativwinkel zwischen der zweiten Längsachse 16 und der ersten Verbindungsebene 14 konstant bei jeweils 45°.

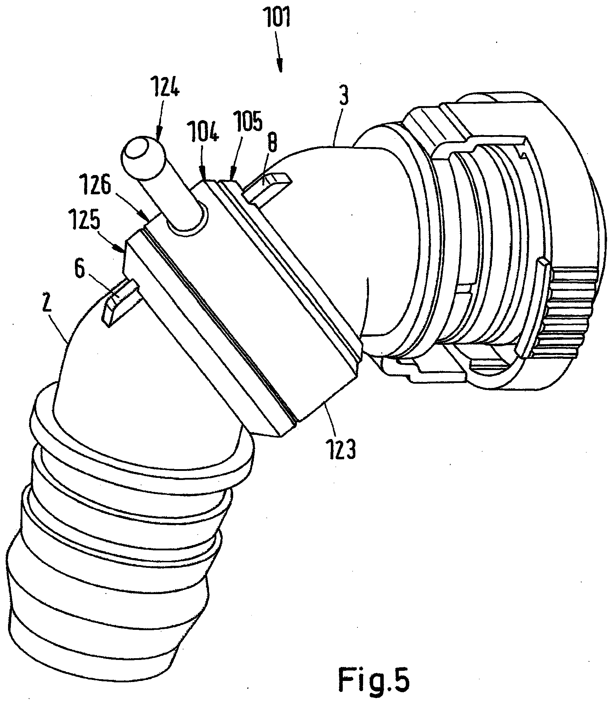

Figur 5 zeigt eine zweite Ausführungsform eines erfindungsgemäßen Steckverbinders 101.

Figur 5 zeigt eine Außenansicht des Steckverbinders 101 mit dem ersten Bauteil 2 und dem zweiten Bauteil 3. Vorzugsweise sind das erste Bauteil 2 und das zweite Bauteil 3 baugleich zur ersten Ausführungsform nach Figuren 1 bis 4e ausgebildet.

Der Steckverbinder 101 umfasst weiterhin ein Zwischenbauteil 123, das zwischen dem ersten Bauteil 2 und dem zweiten Bauteil 3 angeordnet ist. Das Zwischenbauteil 123 ist im Wesentlichen als zylinderförmiger Ring ausgebildet. In dieser Ausführungsform umfasst das Zwischenbauteil 123 einen Nebenstutzen 124. Der Nebenstutzen 124 erlaubt es hierbei beispielsweise Fluid aus dem Steckverbinder abzuführen ohne dass der Steckverbinder von der Fluidleitung gelöst werden müsste. Außerdem ist es beispielsweise möglich, eine Sonde einzuführen, um eine Messung innerhalb der Fluidleitung durchzuführen.

Es sind jedoch auch andere Ausführungsformen für das Zwischenbauteil 123 vorstellbar. So kann das Zwischenbauteil 123 beispielsweise auch ein Ventil umfassen, oder es kann ein Heizelement im Zwischenbauteil angeordnet sein und/oder eine Heizleitung durch einen im Zwischenbauteil angeordneten Heizelementanschluss in den Steckverbinder hineingeführt sein.

Der Steckverbinder 101 umfasst im vorliegenden Beispiel zusätzlich zu einer ersten Verbindungsgeometrie 104 und einer zweiten Verbindungsgeometrie 105 auch noch eine dritte Verbindungsgeometrie 125 sowie eine vierte Verbindungsgeometrie 126. Die dritte Verbindungsgeometrie 125 sowie die erste Verbindungsgeometrie 104 entsprechen hier im Wesentlichen der Ausführungsform der ersten Verbindungsgeometrie 4 aus der ersten Ausführungsform eines erfindungsgemäßen Steckverbinders 1. Die zweite Verbindungsgeometrie 105 sowie die vierte Verbindungsgeometrie 126 entsprechen hier im Wesentlichen der Ausführungsform der zweiten Verbindungsgeometrie 5 aus der ersten Ausführungsform des Steckverbinders 1. In diesem Fall ist jedoch die erste Verbindungsgeometrie 104 im Zwischenbauteil 123 angeordnet, wobei die zweite Verbindungsgeometrie 105 nach wie vor im zweiten Bauteil 3 angeordnet ist.

Zur endgültigen Fixierung eines Relativwinkels zwischen der ersten Längsachse 15 des ersten Bauteils 2 und der zweiten Längsachse 16 des zweiten Bauteils 3 bedarf es hier also zweier stoffschlüssiger Verbindungen. Einerseits muss die erste Verbindungsgeometrie 104 mit der zweiten Verbindungsgeometrie 105 stoffschlüssig beispielsweise durch Reibschweißen oder Ultraschallschweißen verbunden werden, und dementsprechend muss auch eine stoffschlüssige Verbindung zwischen der dritten Verbindungsgeometrie 125 und der vierten Verbindungsgeometrie 126 hergestellt werden. Es sind jedoch auch alternative Ausführungsformen vorstellbar, in denen lediglich eine erste Verbindungsgeometrie 104 und eine zweite Verbindungsgeometrie 105 vorgesehen ist und das Zwischenbauteil 123 beispielsweise durch eine Rastverbindung mit dem ersten Bauteil 2 oder dem zweiten Bauteil 3 verbunden ist. Weiterhin ist auch vorstellbar das Zwischenbauteil zunächst stoffschlüssig mit dem ersten Bauteil oder dem zweiten Bauteil zu verbinden und danach den Relativwinkel zwischen erster Längsachse und zweiter Längsachse zu wählen.

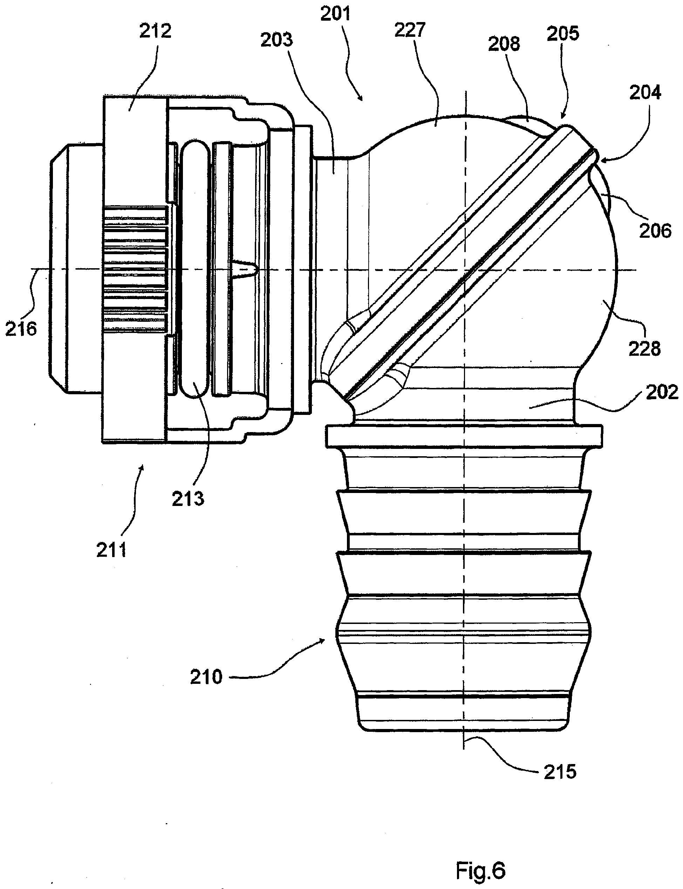

Figuren 6 bis 9 zeigen eine dritte Ausführungsform eines erfindungsgemäßen Steckverbinders 201.

In Fig. 6 wird zunächst eine Außenansicht des Steckverbinders 201 mit einem ersten Bauteil 202 und einem zweiten Bauteil 203 dargestellt. Eine erste Verbindungsgeometrie 204 ist an einem axialen Ende des ersten rohrförmigen Bauteils 202 angeordnet während eine zweite Verbindungsgeometrie 205 an einem axialen Ende des zweiten Bauteils 203 angeordnet ist. Im Bereich der ersten Verbindungsgeometrie 204 ist hier an einer axialen Außenseite des ersten Bauteils 202 ein Vorsprung 206 angeordnet. In entsprechender Weise ist an einer axialen Außenseite des zweiten Bauteils 203 im Bereich der zweiten Verbindungsgeometrie 205 ein Vorsprung 208 angeordnet. Die Vorsprünge 206, 208 haben auch hier den Vorteil, dass sie eine kontrollierte Einstellung des Relativwinkels zwischen der ersten Längsachse 215 und der zweiten Längsachse 216 ermöglichen. Der Steckverbinder 201 weist auch hier einen Anschlussstutzen 210 sowie einen Verbindungsstutzen 211 auf. Der Verbindungsstutzen 211 umfasst eine Rastvorrichtung 212, sowie Dichtringe 213.

Das zweite Bauteil 203 umfasst hier eine radiale Erweiterung 227, an einem axialen Ende im Bereich der zweiten Verbindungsgeometrie 205. Dementsprechend weist das erste Bauteil 202 eine radiale Erweiterung 228 an einem axialen Ende im Bereich der ersten Verbindungsgeometrie 204 auf.

Die radialen Erweiterungen 227, 228 haben hier die Form von Kugelschalenausschnitten. Durch die radialen Erweiterungen 227, 228 lässt sich die Größe der Verbindungsgeometrien 204, 205 im Verhältnis zum Querschnitt der rohrförmigen Bauteile 202,203 anpassen. Insbesondere lässt sich der Schnittpunkt der Längsachsen 215, 216 in den geometrischen Mittelpunkt der ersten Verbindungsgeometrie 204 und der zweiten Verbindungsgeometrie 205 verlagern. Dadurch lässt sich vermeiden, dass in der 0° Drehstellung des Steckverbinders ein axialer Versatz zwischen der ersten Längsachse 215 und der zweiten Längsachse 216 auftritt. Somit kann ein gegebenenfalls nicht gewünschter "Knick" im Steckverbinder vermieden werden.

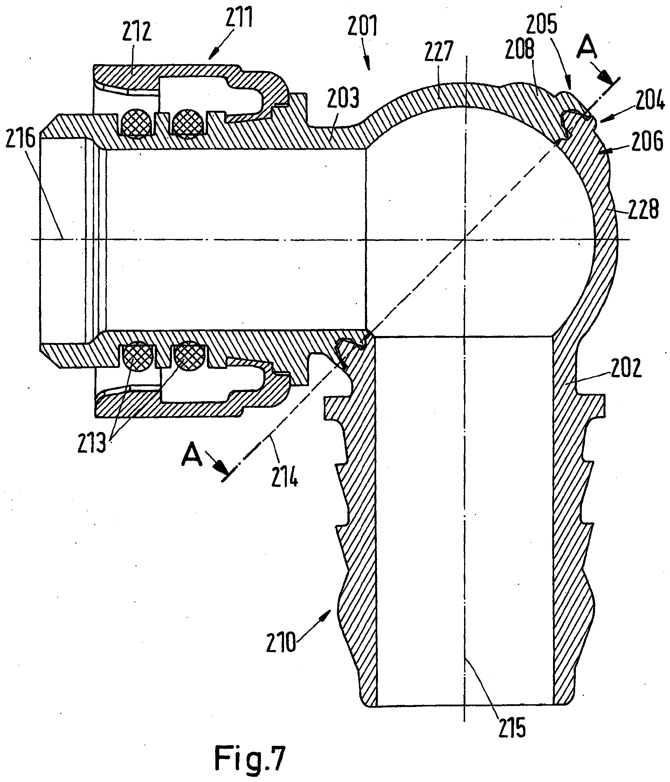

Figur 7 zeigt nun noch eine Schnittansicht des Steckverbinders 201 entsprechend Figur 6. In Figur 7 lässt sich noch einmal die Form der radialen Erweiterungen 227, 228 besser erkennen. Gleichzeitig wird ersichtlich, dass der Schnittpunkt der Längsachsen 215, 216 nunmehr im geometrischen Mittelpunkt der ersten Verbindungsgeometrie 204 und der zweiten Verbindungsgeometrie 205 innerhalb der ersten Verbindungsebene 214 liegt.

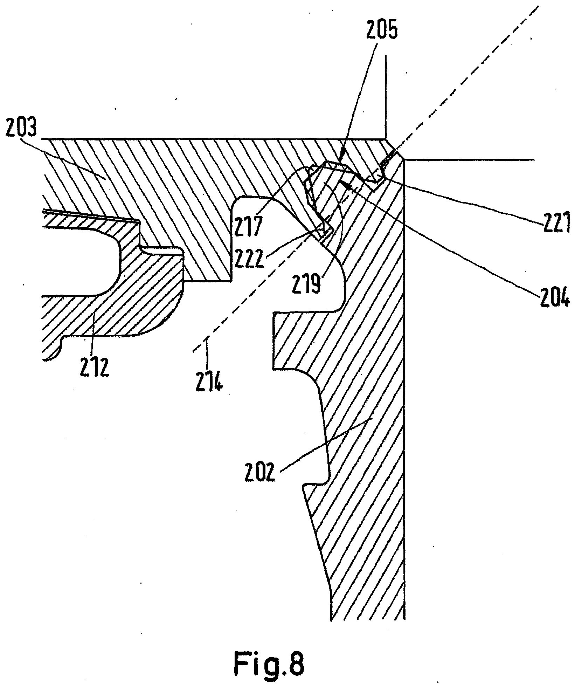

Figur 8 zeigt eine Detailansicht von Figur 7. Hier ist insbesondere im Detail die erste Verbindungsgeometrie 204 und die zweite Verbindungsgeometrie 205 des Steckverbinders 201 erkennbar. Auch hier zeigt die erste Verbindungsgeometrie 204 eine keilförmige Ausnehmung 217, die umlaufend parallel zur ersten Verbindungsebene 214 verläuft. Auch hier bezeichnet "keilförmig" einen keilförmigen Querschnitt der Ausnehmung 217. Die keilförmige Ausnehmung 217 ist in diesem Fall abgestumpft, weist also an ihrer tiefsten Stelle einen flachen Bereich auf.

Die zweite Verbindungsgeometrie 205 umfasst einen keilförmigen Verbindungsvorsprung 219, der ebenfalls umlaufend und parallel zur ersten Verbindungsebene 214 verläuft. Der keilförmige Verbindungsvorsprung 219 ist hier stark abgestumpft und weist einen ausgedehnten flachen Bereich an seiner Spitze auf. Die zweite Verbindungsgeometrie 205 umfasst hier zwei umlaufende Schultern 221, 222. Eine umlaufende Schulter 222 ist an einer radialen Innenseite der zweiten Verbindungsgeometrie 205 angeordnet, während die andere umlaufende Schulter 222 an einer radialen Außenseite der zweiten Verbindungsgeometrie 205 angeordnet ist. Auch hier betrifft der Begriff "keilförmig" den Querschnitt des Verbindungsvorsprungs, wobei hier jedoch eine stark abgestumpfte Keilform verwendet wird.

Der keilförmige Verbindungsvorsprung 219 greift in die keilförmige Ausnehmung 217 ein, wobei jedoch der keilförmige Verbindungsvorsprung 219 einen größeren Querschnitt als die keilförmige Ausnehmung 217 aufweist. Hierbei sind jedoch auch beliebige andere Formen für die Ausnehmung und den Verbindungsvorsprung möglich, wobei lediglich sichergestellt sein sollte, dass der Verbindungsvorsprung einen größeren Querschnitt als die Ausnehmung aufweist, so dass für einen Verbindungsvorgang überschüssiges Material zur Verfügung steht. Das überschüssige Material kann dann auch eine zumindest teilweise stoffschlüssige Verbindung zwischen den umlaufenden Schultern 221, 222 mit der ersten Verbindungsgeometrie 204 ermöglichen, wodurch sich die Dichtheit der Verbindung zwischen dem ersten Bauteil 202 und dem zweiten Bauteil 203 verbessern lässt.

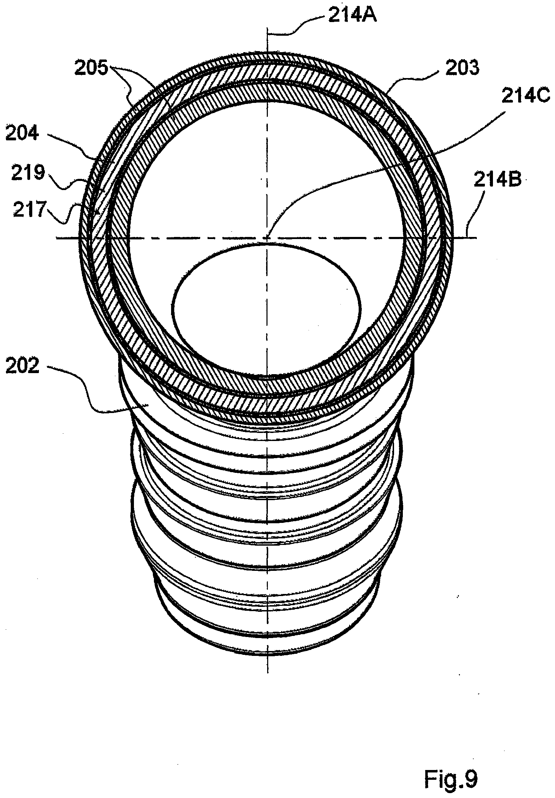

Figur 9 zeigt noch eine weitere Schnittdarstellung des Steckverbinders 201. In diesem Fall ist eine Schnittdarstellung entlang der Schnittebene A entsprechend Figur 7 gewählt, die einem Schnitt entlang der ersten Verbindungsebene 214 entspricht. Hier lässt sich noch einmal deutlich erkennen, dass die erste Verbindungsgeometrie 204 und die zweite Verbindungsgeometrie 205 hier einen kreisförmigen Querschnitt innerhalb der ersten Verbindungsebene 214 aufweisen. Die erste Verbindungsebene 214 wird hier durch die beiden in der Verbindungsebene liegenden Achsen 214A, 214B symbolisiert. Am Schnittpunkt der beiden Achsen 214A, 214B liegt auch der geometrische Mittelpunkt 214C der ersten Verbindungsgeometrie 204 und der zweiten Verbindungsgeometrie 205. Die erste Längsachse 215 und die zweite Längsachse 216 schneiden sich in dieser Ausführungsform auch in diesem geometrischen Mittelpunkt 214C unabhängig vom eingestellten Relativwinkel zwischen erster Längsachse 215 und zweiter Längsachse 216.

Weiterhin lässt sich in Figur 9 im Detail erkennen, wie die erste Verbindungsgeometrie 204 in die zweite Verbindungsgeometrie 205 mit dem keilförmigen Verbindungvorsprung 219 in die keilförmige Ausnehmung 217 eingreift.

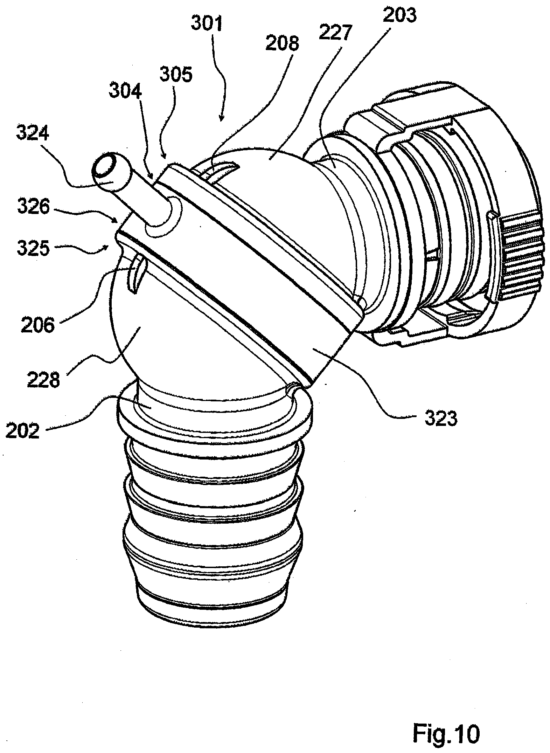

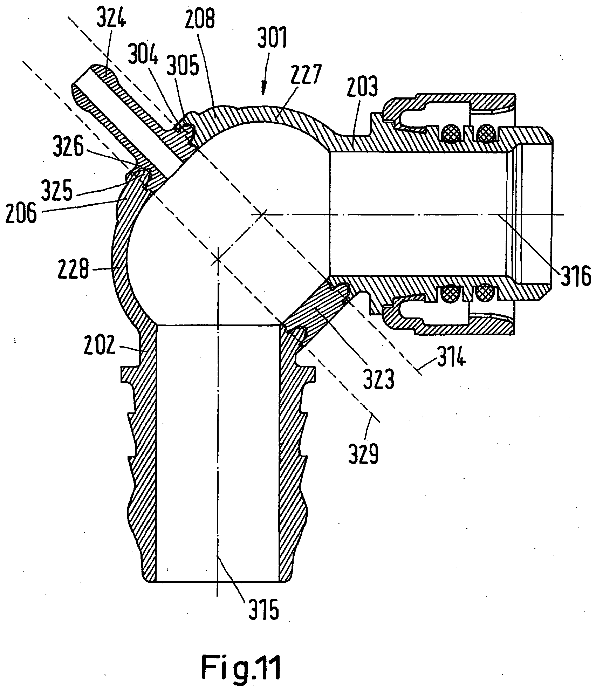

Figuren 10 und 11 zeigen eine vierte Ausführungsform eines erfindungsgemäßen Steckverbinders. Ähnlich wie in Figur 5 weist der Steckverbinder 301 ein zusätzliches Zwischenbauteil 323 zwischen dem ersten Bauteil 202 und dem zweiten Bauteil 203 auf. Das erste Bauteil 202 und das zweite Bauteil 203 sind hier baugleich zur dritten Ausführungsform des erfindungsgemäßen Steckverbinders 201.

Der Steckverbinder 301 umfasst eine erste Verbindungsgeometrie 304 die im Zwischenbauteil 323 angeordnet ist. Die zweite Verbindungsgeometrie 305 ist an einem axialen Ende des zweiten Bauteils 203 angeordnet. Die erste Verbindungsgeometrie 304 und die zweite Verbindungsgeometrie 305 verlaufen in der ersten Verbindungsebene 314.

Der Steckverbinder 301 weist außerdem noch eine dritte Verbindungsgeometrie 325 sowie eine vierte Verbindungsgeometrie 326 auf. Die dritte Verbindungsgeometrie 325 ist an einem axialen Ende des ersten Bauteils 202 angeordnet und verläuft innerhalb einer zweiten Verbindungsebene 329. Die dritte Verbindungsgeometrie 325 greift in die vierte Verbindungsgeometrie 326 ein, wobei die vierte Verbindungsgeometrie 326 im Zwischenbauteil 323 angeordnet ist. Die vierte Verbindungsgeometrie 326 ist ebenfalls in der zweiten Verbindungsebene 329 angeordnet. Das Zwischenbauteil 323 umfasst einen Nebenstutzen 324 der hier beispielsweise einen Flüssigkeitszu- oder -ablauf ermöglicht oder das Einführen eines Sensors in die Fluidleitung ermöglicht.

Alternativ oder zusätzlich kann im Zwischenbauteil auch ein Ventil angeordnet sein. Eine derartige Ausführungsform erlaubt es dann einen Steckverbinder mit einer zusätzlichen Ventilfunktionalität auszustatten, ohne dass die Grundbauteile in Form des ersten rohrförmigen Bauteils und des zweiten rohrförmigen Bauteils angepasst werden müssten.

Weiterhin alternativ oder zusätzlich könnte im Zwischenbauteil auch ein Heizelement angeordnet und/oder eine Heizleitung durch einen im Zwischenbauteil angeordneten Heizleitungsanschluss in den Steckverbinder hineingeführt sein. Eine derartige Lösung wäre insbesondere dann von Vorteil, wenn durch die Fluidleitung ein Fluid mit einem verhältnismäßig hohen Gefrierpunkt geführt wird. Dies betrifft vor allem die im Automobilbereich oftmals verwendeten Urea-Leitungen, die in vielen Fällen eine Heizleitung bzw. ein Heizelement umfassen.

Eine Verbindung zwischen der dritten Verbindungsgeometrie 325 und der vierten Verbindungsgeometrie 326 erfolgt hier entsprechend der Verbindung zwischen der ersten Verbindungsgeometrie 304 und der zweiten Verbindungsgeometrie 305, also durch eine stoffschlüssige Verbindung.

## Patentansprüche

1. Verfahren zur Herstellung eines Steckverbinders, wobei der Steckverbinder (1, 101, 201, 301) ein erstes rohrförmiges Bauteil (2, 202) und ein zweites rohrförmiges Bauteil (3, 203), sowie eine erste Verbindungsgeometrie (4,104, 204, 304) und eine zweite Verbindungsgeometrie (5,105, 205, 305) umfasst, wobei die erste Verbindungsgeometrie (4,104, 204, 304) in einer ersten Verbindungsebene (14, 214, 314) angeordnet ist, und wobei die zweite Verbindungsgeometrie (5,105, 205, 305) in der ersten Verbindungsebene (14, 214, 314) angeordnet ist, und wobei die erste Verbindungsebene (14, 214, 314) gegenüber einer ersten Längsachse (15, 215, 315) des ersten Bauteils (2, 202) geneigt ist, und wobei die erste Verbindungsebene (14, 214, 314) gegenüber einer zweiten Längsachse (16, 216, 316) des zweiten Bauteils (3, 203) geneigt ist, und wobei durch ein Verdrehen des ersten Bauteils (2, 202) gegenüber dem zweiten Bauteil (3, 203) ein Relativwinkel zwischen der ersten Längsachse (15, 215, 315) und der zweiten Längsachse (16, 216, 316) veränderbar ist, **gekennzeichnet durch** die folgenden Schritte:
- Auswahl eines Relativwinkels zwischen der ersten Längsachse (15, 215, 315) und der zweiten Längsachse (16, 216, 316) **durch** Verdrehen des ersten Bauteils (2, 202) gegenüber dem zweiten Bauteil (3, 203),
- stoffschlüssiges Verbinden der ersten Verbindungsgeometrie (4, 104, 204, 304) mit der zweiten Verbindungsgeometrie (5,105, 205, 305) in dem ausgewählten Relativwinkel, wobei die stoffschlüssige Verbindung **durch** Reibschweißen und/oder Ultraschallschweißen und/oder Heißgasschweißen und/oder Laserschweißen erfolgt und eine Verbindungsgeometrie (5, 105, 205, 305) einen umlaufenden, keilförmigen Verbindungsvorsprung (19, 219) aufweist, der in eine umlaufende keilförmige Ausnehmung (17, 217) der anderen Verbindungsgeometrie (4, 104, 204, 304) eingreift.

2. Verfahren nach Anspruch 1, **dadurch gekennzeichnet, dass** die erste Verbindungsgeometrie (104, 304) in einem Zwischenbauteil (123, 323) angeordnet ist, das vor dem stoffschlüssigen Verbinden der ersten Verbindungsgeometrie (104, 304) mit der zweiten Verbindungsgeometrie (105, 305) gegenüber dem ersten Bauteil (2, 202) und/oder dem zweiten Bauteil (3, 203) verdrehbar ist.

3. Verfahren nach Anspruch 1 oder 2, **dadurch gekennzeichnet, dass** der Steckverbinder (101, 301) eine dritte Verbindungsgeometrie (125, 325) und eine vierte Verbindungsgeometrie (126, 326) umfasst, wobei die dritte Verbindungsgeometrie (125, 325) und die vierte Verbindungsgeometrie (126, 326) in einer zweiten Verbindungsebene (329) angeordnet sind.

4. Verfahren nach Anspruch 3, **dadurch gekennzeichnet, dass** die zweite Verbindungsebene (329) parallel zur ersten Verbindungsebene (314) verläuft, unabhängig vom Relativwinkel zwischen der ersten Längsachse (315) und der zweiten Längsachse (316).

5. Verfahren nach Anspruch 3 oder 4, **dadurch gekennzeichnet, dass** nach Auswahl des Relativwinkels zwischen der ersten Längsachse (315) und der zweiten Längsachse (316) die dritte Verbindungsgeometrie (125, 325) mit der vierten Verbindungsgeometrie (126, 326) stoffschlüssig verbunden wird.

6. Verfahren nach einem der Ansprüche 1 bis 5, **dadurch gekennzeichnet, dass** der Steckverbinder (1, 101, 201, 301) mindestens einen an einer Außenseite des Steckverbinders (1, 101, 201, 301) angeordneten Vorsprung (6, 7, 8, 9, 206, 208) aufweist, wobei der mindestens eine Vorsprung (6, 7, 8, 9, 206, 208) senkrecht zur ersten Verbindungsebene verläuft.

7. Steckverbinder umfassend ein erstes rohrförmiges Bauteil (2, 202) und ein zweites rohrförmiges Bauteil (3, 203), sowie eine erste Verbindungsgeometrie (4,104, 204, 304) und eine zweite Verbindungsgeometrie (5,105, 205, 305), wobei die erste Verbindungsgeometrie (4, 104, 204, 304) in einer ersten Verbindungsebene (14, 214, 314) angeordnet ist, und wobei die zweite Verbindungsgeometrie (5,105, 205, 305) in der ersten Verbindungsebene (14, 214, 314) angeordnet ist, wobei dadurch die erste Verbindungsebene (14, 214, 314) gegenüber einer ersten Längsachse (15, 215, 315) des ersten Bauteils (2, 202) geneigt ist, und wobei die erste Verbindungsebene (14, 214, 314) gegenüber einer zweiten Längsachse (16, 216, 316) des zweiten Bauteils (3, 203) geneigt ist, **dadurch gekennzeichnet,**
**dass** die erste Verbindungsgeometrie (4,104, 204, 304), die eine keilförmige Ausnehmung (17, 217) aufweist, die umlaufend parallel zur ersten Verbindungsebene (14, 214, 314) verläuft, mit der zweiten Verbindungsgeometrie (5,105, 205, 305), die einen keilförmigen Verbindungsvorsprung (19, 219) aufweist, der ebenfalls umlaufend und parallel zur ersten (14, 214, 314) verläuft, stoffschlüssig verbunden ist.

8. Steckverbinder nach Anspruch 7, **dadurch gekennzeichnet, dass** die erste Verbindungsgeometrie (104, 304) in einem Zwischenbauteil (123, 323) angeordnet ist, wobei die zweite Verbindungsgeometrie (105, 305) im ersten Bauteil (2, 202) oder im zweiten Bauteil (3, 203) angeordnet ist.

9. Steckverbinder nach Anspruch 8 **dadurch gekennzeichnet, dass** das Zwischenbauteil einen Nebenstutzen (124, 324) umfasst.

10. Steckverbinder nach einem der Ansprüche 7 bis 9, **dadurch gekennzeichnet, dass** die erste Verbindungsgeometrie (4, 104, 204, 304) und die zweite Verbindungsgeometrie (5,105, 205, 305) jeweils kreisförmig in der ersten Verbindungsebene (14, 214, 314) verlaufen.

11. Steckverbinder nach einem der Ansprüche 7 bis 10, **dadurch gekennzeichnet, dass** sich die erste Längsachse (215) und die zweite Längsachse (216) in einem geometrischen Mittelpunkt (214C) der ersten Verbindungsgeometrie (204) und der zweiten Verbindungsgeometrie (205) schneiden.

12. Steckverbinder nach einem der Ansprüche 7 bis 11, **dadurch gekennzeichnet, dass** das erste Bauteil (202) und/oder das zweite Bauteil (203) an einem Ende eine radiale Erweiterung (227, 228) aufweist.

13. Steckverbinder nach einem der Ansprüche 7 bis 12, **dadurch gekennzeichnet, dass** der Steckverbinder (1,101, 201, 301) mindestens einen an einer Außenseite des Steckverbinders angeordneten Vorsprung (6, 7, 8, 9, 206, 208) aufweist, wobei insbesondere der mindestens eine Vorsprung (6, 7, 8, 9, 206, 208) senkrecht zur ersten Verbindungsebene (14, 214, 314) verläuft.

## Claims

1. Method for manufacturing a connector, whereby the connector (1,101,201,301) comprises a first tubular component (2,202) and a second tubular component (3,203) as well as a first connection geometry (4,104,204,304) and a second connection geometry (5,105,205,305), whereby the first connection geometry (4,104,204,304) is arranged in a first connection plane (14,214,314) and whereby the second connection geometry (5,105,205,305) is arranged in the first connection plane (14,214,314), and whereby the first connection plane (14,214,314) is inclined relative to a first longitudinal axis (15,215,315) of the first component (2,202), and whereby the first connection plane (14,214,314) is inclined relative to a second longitudinal axis (16,216,316) of the second component (3,203), and whereby a relative angle between the first longitudinal axis (15,215,315) and the second longitudinal axis (16,216,316) is variable by means of a rotation of the first component (2,202) relative to the second component (3,203), **characterised by** the following steps:
- selection of a relative angle between the first longitudinal axis (15,215,315) and the second longitudinal axis (16,216,316) by rotating the first component (2,202) relative to the second component (3,203),
- material connection of the first connection geometry (4,104,204,304) with the second connection geometry (5,105,205,305) in the selected relative angle, whereby the material connection is achieved by friction welding and/or ultrasound welding and/or hot gas welding and/or laser welding and a connection geometry (5,105,205,305) has a circumferential, wedge-shaped connection projection (19,219) that engages in a circumferential, wedge-shaped recess (17,217) of the other connection geometry (4,104,204,304).

2. Method according to claim 1, **characterised in that** the first connection geometry (104,304) is arranged in an intermediate component (123,323) that is rotatable relative to the first component (2,202) and/or the second component (3,203) prior to the material connection of the first connection geometry (104,304) with the second connection geometry (105,305).

3. Method according to claim 1 or 2, **characterised in that** the connector (101,301) comprises a third connection geometry (125,325) and a fourth connection geometry (126,326), whereby the third connection geometry (125,325) and a fourth connection geometry (126,326) are arranged in a second connection plane (329).

4. Method according to claim 3, **characterised in that** the second connection plane (329) runs parallel to the first connection plane (314), independently of the relative angle between the first longitudinal axis (315) and the second longitudinal axis (316).

5. Method according to claim 3 or 4, **characterised in that**, after selection of the relative angle between the first longitudinal axis (315) and the second longitudinal axis (316), the third connection geometry (125,325) is materially connected with the fourth connection geometry (126,326).

6. Method according to one of claims 1 to 5 **characterised in that** the connector (1,101,201,301) has at least one projection (6,7,8,9,206,208) arranged on an outer side of the connector (1,101,201,301), whereby the at least one projection (6,7,8,9,206,208) runs perpendicular to the first connection plane.

7. Connector comprising a first tubular component (2,202) and a second tubular component (3,203) as well as a first connection geometry (4,104,204,304) and a second connection geometry (5,105,205,305), whereby the first connection geometry (4,104,204,304) is arranged in a first connection plane (14,214,314) and whereby the second connection geometry (5,105,205,305) is arranged in the first connection plane (14,214,314), whereby the first connection plane (14,214,314) is inclined relative to a first longitudinal axis (15,215,315) of the first component (2,202), and whereby the first connection plane (14,214,314) is inclined relative to a second longitudinal axis (16,216,316) of the second component (3,203), **characterised in that**
the first connection geometry (4,104,204,304), which has a wedge-shaped recess (17,217) that runs circumferentially parallel to the first connection plane (14,214,314), is materially connected with the second connection geometry (5,105,205,305), which has a wedge-shaped connection projection (19,219) that also runs circumferentially and parallel to the first connection plane (14,214,314).

8. Connector according to claim 7, **characterised in that** the first connection geometry (104,304) is arranged in an intermediate component (123,323), whereby the second connection geometry (105,305) is arranged in the first component (2,202) or in the second component (3,203).

9. Connector according to claim 8, **characterised in that** the intermediate component comprises an auxiliary connection (124,134).

10. Connector according to one of claims 7 to 9, **characterised in that** the first connection geometry (4,104,204,304) and the second connection geometry (5,105,205,305) each run circularly in the first connection plane (14,214,314).

11. Connector according to one of claims 7 to 10, **characterised in that** the first longitudinal axis (215) and the second longitudinal axis (216) intersect in a geometrical centre point (214C) of the first connection geometry (204) and the second connection geometry (205).

12. Connector according to one of claims 7 to 11, **characterised in that** the first component (202) and/or the second component (203) has a radial widening (227,228) at one end.

13. Connector according to one of claims 7 to 12, **characterised in that** the connector (1,101,201,301) has at least one projection (6,7,8,9,206,208) arranged on an outer side of the connector, whereby in particular the at least one projection (6,7,8,9,206,208) runs perpendicular to the first connection plane (14,214,314).

## Revendications

1. Procédé servant à fabriquer un connecteur à fiches, dans lequel le connecteur à fiches (1, 101, 201, 301) comprend un premier composant (2, 202) de forme tubulaire et un deuxième composant (3, 203) de forme tubulaire ainsi qu'une première géométrie de raccordement (4, 104, 204, 304) et une deuxième géométrie de raccordement (5, 105, 205, 305), dans lequel la première géométrie de raccordement (4, 104, 204, 304) est disposée dans un premier plan de raccordement (14, 214, 314), et dans lequel la deuxième géométrie de raccordement (5, 105, 205, 305) est disposée dans le premier plan de raccordement (14, 214, 314), et dans lequel le premier plan de raccordement (14, 214, 314) est incliné par rapport à un premier axe longitudinal (15, 215, 315) du premier composant (2, 202), et dans lequel le premier plan de raccordement (14, 214, 314) est incliné par rapport à un deuxième axe longitudinal (16, 216, 316) du deuxième composant (3, 203), et dans lequel un angle relatif entre le premier axe longitudinal (15, 215, 315) et le deuxième axe longitudinal (16, 216, 316) peut être modifié par une rotation du premier composant (2, 202) par rapport au deuxième composant (3, 203), **caractérisé par** les étapes suivantes :
- la sélection d'un angle relatif entre le premier axe longitudinal (15, 215, 315) et le deuxième axe longitudinal (16, 216, 316) par la rotation du premier composant (2, 202) par rapport au deuxième composant (3, 203),
- le raccordement par liaison de matière de la première géométrie de raccordement (4, 104, 204, 304) à la deuxième géométrie de raccordement (5, 105, 205, 305) selon l'angle relatif sélectionné, dans lequel le raccordement par liaison de matière est effectué par soudage par friction et/ou par soudage par ultrasons et/ou par soudage au gaz chaud et/ou par soudage au laser et une géométrie de raccordement (5, 105, 205, 305) présente une partie faisant saillie de raccordement (19, 219) périphérique en forme de coin, qui vient en prise avec un évidement (17, 217) périphérique en forme de coin de l'autre géométrie de raccordement (4, 104, 204, 304).

2. Procédé selon la revendication 1, **caractérisé en ce que** la première géométrie de raccordement (104, 304) est disposée dans un composant intermédiaire (123, 323), qui peut être tourné, avant le raccordement par liaison de matière de la première géométrie de raccordement (104, 304) à la deuxième géométrie de raccordement (105, 305), par rapport au premier composant (2, 202) et/ou au deuxième composant (3, 203).

3. Procédé selon la revendication 1 ou 2, **caractérisé en ce que** le connecteur à fiches (101, 301) comprend une troisième géométrie de raccordement (125, 325) et une quatrième géométrie de raccordement (126, 326), dans lequel la troisième géométrie de raccordement (125, 325) et la quatrième géométrie de raccordement (126, 326) sont disposées dans un deuxième plan de raccordement (329).

4. Procédé selon la revendication 3, **caractérisé en ce que** le deuxième plan de raccordement (329) s'étend de manière parallèle par rapport au premier plan de raccordement (314), indépendamment de l'angle relatif entre le premier axe longitudinal (315) et le deuxième axe longitudinal (316).

5. Procédé selon la revendication 3 ou 4, **caractérisé en ce que** la troisième géométrie de raccordement (125, 325) est reliée par liaison de matière à la quatrième géométrie de raccordement (126, 326) après la sélection de l'angle relatif entre le premier axe longitudinal (315) et le deuxième axe longitudinal (316).

6. Procédé selon l'une quelconque des revendications 1 à 5, **caractérisé en ce que** le connecteur à fiches (1, 101,201, 301) présente au moins une partie faisant saillie (6, 7, 8, 9, 206, 208) disposée au niveau d'un côté extérieur du connecteur à fiches (1, 101, 201, 301), dans lequel l'au moins une partie faisant saillie (6, 7, 8, 9, 206, 208) s'étend de manière perpendiculaire par rapport au premier plan de raccordement.

7. Connecteur à fiches comprenant un premier composant (2, 202) de forme tubulaire et un deuxième composant (3, 203) de forme tubulaire ainsi qu'une première géométrie de raccordement (4, 104, 204, 304) et une deuxième géométrie de raccordement (5, 105, 205, 305), dans lequel la première géométrie de raccordement (4, 104, 204, 304) est disposée dans un premier plan de raccordement (14, 214, 314), et dans lequel la deuxième géométrie de raccordement (5, 105, 205, 305) est disposée dans le premier plan de raccordement (14, 214, 314), dans lequel le premier plan de raccordement (14, 214, 314) est incliné par rapport à un premier axe longitudinal (15, 215, 315) du premier composant (2, 202), et dans lequel le premier plan de raccordement (14, 214, 314) est incliné par rapport à un deuxième axe longitudinal (16, 216, 316) du deuxième composant (3, 203), **caractérisé en ce que** la première géométrie de raccordement (4, 104, 204, 304), qui présente un évidement (17, 217) en forme de coin, qui s'étend en périphérie de manière parallèle par rapport au premier plan de raccordement (14, 214, 314), est reliée par liaison de matière à la deuxième géométrie de raccordement (5, 105, 205, 305), qui présente une partie faisant saillie de raccordement (19, 219) en forme de coin, laquelle s'étend également en périphérie et de manière parallèle par rapport au premier plan de raccordement (14, 214, 314).

8. Connecteur à fiches selon la revendication 7, **caractérisé en ce que** la première géométrie de raccordement (104, 304) est disposée dans un composant intermédiaire (123, 323), dans lequel la deuxième géométrie de raccordement (105, 305) est disposée dans le premier composant (2, 202) ou dans le deuxième composant (3, 203).

9. Connecteur à fiches selon la revendication 8, **caractérisé en ce que** le composant intermédiaire comprend une tubulure secondaire (124, 324).

10. Connecteur à fiches selon l'une quelconque des revendications 7 à 9, **caractérisé en ce que** la première géométrie de raccordement (4, 104, 204, 304) et la deuxième géométrie de raccordement (5, 105, 205, 305) s'étendent respectivement de manière à présenter une forme circulaire dans le premier plan de raccordement (14, 214, 314).

11. Connecteur à fiches selon l'une quelconque des revendications 7 à 10, **caractérisé en ce que** le premier axe longitudinal (215) et le deuxième axe longitudinal (216) s'entrecoupent en un point central (214C) géométrique de la première géométrie de raccordement (204) et de la deuxième géométrie de raccordement (205).

12. Connecteur à fiches selon l'une quelconque des revendications 7 à 11, **caractérisé en ce que** le premier composant (202) et/ou le deuxième composant (203) présentent au niveau d'une extrémité un élargissement (227, 228) radial.

13. Connecteur à fiches selon l'une quelconque des revendications 7 à 12, **caractérisé en ce que** le connecteur à fiches (1, 101, 201, 301) présente au moins une partie faisant saillie (6, 7, 8, 9, 206, 208) disposée au niveau d'un côté extérieur du connecteur à fiches, dans lequel en particulier l'au moins une partie faisant saillie (6, 7, 8, 9, 206, 208) s'étend de manière perpendiculaire par rapport au premier plan de raccordement (14, 214, 314).
